# EUROPEAN PATENT SPECIFICATION

(11) **EP 2 516 199 B1**
(45) Date of publication and mention of the grant of the patent: **17.09.2014**
(21) Application number: 10798976.6
(22) Date of filing: 21.12.2010
(51) Int. Cl.: B60L 5/00, H02J 5/00, B60L 11/18, B60M 1/36

(54) **SYSTEM AND METHOD FOR TRANSFERRING ELECTRIC ENERGY TO A VEHICLE**
SYSTEM UND VERFAHREN ZUR ÜBERTRAGUNG ELEKTRISCHER ENERGIE ZUM FAHRZEUG
SYSTÈME ET PROCÉDÉ ADAPTÉS POUR TRANSFÉRER DE L'ÉNERGIE ÉLECTRIQUE À UN VÉHICULE

(30) Priority: 23.12.2009 GB 0922543
(43) Date of publication of application: 31.10.2012
(73) Proprietor: Bombardier Transportation GmbH, 10785 Berlin (DE)
(72) Inventor: VOLLENWYDER, Kurt, Kingston Ontario K7M 3Y8 (CA); DICKSON, Timothy Russell, Kingston Ontario K7M 4H1 (CA); WORONOWICZ, Konrad, Kingston Ontario K7P 0E4 (CA)
(74) Representative: Patentanwälte Bressel und Partner mbB
(86) International application number: PCT/EP2010/007985
(87) International publication number: WO 2011/076433

(56) References cited:
- US-A- 4 800 328
- US-A- 5 207 304
- US-A- 5 311 973
- US-A- 5 821 728

## Description

The invention relates to a system and a method for transferring electric energy to a vehicle, in particular to a track bound vehicle such as a light rail vehicle (e.g. a tram).

Track bound vehicles, such as conventional rail vehicles, mono-rail vehicles, trolley busses and vehicles which are guided on a track by other means, such as other mechanical means, magnetic means, electronic means and/or optical means, require electric energy for propulsion on the track and for operating auxiliary systems, which do not produce traction of the vehicle. Such auxiliary systems are, for example, lighting systems, heating and/or air condition system, the air ventilation and passenger information systems. However, more particularly speaking, the present invention is related to a system for transferring electric energy to a vehicle which is not necessarily {but preferably) a track bound vehicle. Generally speaking, the vehicle may be, for example, a vehicle having an electrically operated propulsion motor. The vehicle may also be a vehicle having a hybrid propulsion system, e.g. a system which can be operated by electric energy or by other energy, such as electrochemically stored energy or fuel (e.g. natural gas, gasoline or petrol).

Track bound vehicles, in particular vehicles for public passenger transport, usually comprise a current collector for mechanically and electrically contacting a line conductor along the track, such as an electric rail or an overhead line. At least one propulsion motor on board the vehicles is fed with the electrical power from the external track or line and produces mechanical propulsion force.

Trams and other local or regional trains are operated usually via overhead lines within cities. However, especially in historic parts of cities, overhead lines are undesirable. On the other hand, conductor rails in the ground or near the ground cause safety problems.

WO 95/30556 A2 describes a road way-powered electric vehicle system. The all-electric vehicle has one or more on-board energy storage elements or devices that can be rapidly charged or energized with energy obtained from an electrical source, such as a network of electromechanical batteries. The energy storage elements may be charged while the vehicle is in operation. The charging occurs through a network of power coupling elements, e.g. coils embedded in the road way.

Placing the coils at selected locations along the length of the roadway has the disadvantage that the energy storage on board the vehicle needs a large storage capacity. In addition, if the vehicle does not reach the next coil in time, the vehicle might run out of energy for propulsion or other purposes. Therefore, at least for some applications, it is preferred to transfer energy to the vehicle continuously along the path of travel, i.e. along the track.

US 5,821,728 discloses charging of batteries of a moving electric vehicle using an electromagnetic field extended along the center line of a driving lane. Means for producing the field comprise a series of inductive coils, switches and sensors. For operating the field winding switches a high pitch sound or other type wave form is transmitted from the vehicle by a transmitter antenna and is received by the sensors located adjacent to the switches.

Although US 5,821,728 proposes a system which is capable of continuously transferring energy to the vehicle while the vehicle is driving, the system has several disadvantages. One disadvantage is the fact that the different coils for producing the electromagnetic field are connected to a power supply line which carries an alternating current. Therefore, the power supply line also produces an electromagnetic field.

In order to improve the EMC (Electromagnetic Compatibility) the coils (more generally speaking: the segments of the conductor arrangement for producing the electromagnetic field) may be fed by a direct current line. Each segment may comprise an inverter for converting the direct current to an alternating current for producing the electromagnetic field.

Furthermore, the coils and the power supply line of US 5,821,728 produce electromagnetic waves at different frequencies. At least some of these frequencies may disturb the devices and systems in the environment. Producing a constant alternating current in the line or lines of the segment has several advantages compared to the operation of the segment at constant voltage. One advantage is that the constant current may be a sinus function of time. This means that only a single frequency of electromagnetic waves is produced. Operating the segment at constant voltage in contrast produces non-sinusoidal functions which means that harmonics at different frequencies are produced.

However, constant current operation has also disadvantages. In particular, it is difficult to detect if any vehicle above the segment on the track actually receives energy by receiving the electromagnetic waves. The current would be the same during energy transfer as if there is no vehicle above the segment.

A vehicle which is traveling on the track will comprise at least one receiver (see for example the level controlled armature of US 5,821,728) for receiving the electromagnetic energy transmitted by the waves or field which is produced by the segment. Typically, the receiver, which may also be called pick-up, comprises conductor windings for at least one phase. There are many possible reasons for a malfunction or damage of the receiver. At least one of the windings may be defect or shorted to other windings. Mechanical vibrations might occur and disturb the operation of the receiver. A cooling device for cooling the receiver might fail. In all these cases and in case of an overload the receiver should not receive any electromagnetic waves, i.e. should not be provided with further energy and should not be operated any longer. However, if the segment on the track continues with the emission of electromagnetic waves, the receiver and/or connected parts may overheat and catch fire.

EMC requires that segments are switched off if there is no vehicle above the segment. Therefore, a segment should be switched on preferably when it is fully covered by a vehicle and should be switched off again when it is no longer fully covered by the vehicle. Since it is difficult to detect for constant current operation that a vehicle is actually covering the segment and is receiving energy, it might happen that a non-covered segment is still emitting electromagnetic waves.

US 4,800,328 discloses a constant voltage inductive power coupling for magnetically transferring electrical power from a power source to a load. A first electromagnetic inductor is connected to the power source. The first inductor may be installed at a fixed location within the ground. A second inductor may be installed in a vehicle for the purpose of either charging a series of batteries or for directly energizing electrical drive motors or the like. The second inductor has an AC output which is connected to a charge controller which controls battery charging. The controller is connected to a vehicle computer which provides on/off input signals that control activations of the charging circuit. The controller also functions to control power supplied via output signals to a magnetic switch control, which is associated with a magnetic reed switch that controls a relay in a line from a power source to the first inductor. Auxiliary functions of the controller include the capability of responding to a command from a vehicle's control electronics to turn the charger on or off. This is accomplished by using an electromagnet drive transistor to turn on an electromagnet switch control, which in turn activates a magnetic switch to turn on the input inductor (first inductor).

As mentioned before, US 5,821,728 discloses an arrangement comprising an inductive coil and armature. Means for producing a magnetic field comprising a series of inductive coils, switches and sensors are disclosed. Power is supplied to the inductive coils by power lines. Means for operating the inductive coils maybe high pitch sound or other type wave form transmitted from the vehicle by a transmitter antenna and received by the sensors located adjacent to the switches. Sensors receiving signals from the transmitter will cause the switches to close activating short sections of an electromagnetic strip in the area of the vehicle.

US 5,207,304 discloses an inductive energyzation system for moving vehicles which system includes wayside inductors under the roadway and pickup inductor circuits in electrically powered vehicles. The roadway inductor is split into many segments. Sensors in the roadway detect when vehicles requiring power are present, and a wayside inductor segment controller responds to the sensory signals by energizing only those wayside inductor segments needed to transfer power to such vehicles. In addition, the roadway sensors can be designed to detect identification signals broadcast by vehicle identification transmitters, thereby enabling the system to charge for energy usage by each vehicle.

It is an object of the present invention to provide a system for transferring electromagnetic energy from a track to a vehicle, in particular to a track bound vehicle, which reduces unnecessary production of electromagnetic fields, wherein the receiver and the parts and devices which are connected to the receiver within the vehicle are protected in case of failure and overload. It is a further object of the invention to provide a corresponding vehicle and a corresponding method of transferring electromagnetic energy to the vehicle.

The system comprises an electric conductor arrangement for producing an alternating electromagnetic field and for thereby transferring electromagnetic energy to the vehicle. The conductor arrangement comprises at least one and preferably a plurality of consecutive segments, wherein each segment extends along a different section of the path of travel of the vehicle. Each segment can be switched on and off separately of the other segments, if there are more than one segments. As mentioned above, the vehicle comprises at least one receiver for receiving the electromagnetic energy which is produced by the segment or segments.

According to a basic concept of the invention, the vehicle comprises at least one enable signal transmitter which repeatedly or continuously emits an enable signal to the track. The enable signal is received by a signal receptor of each segment if the receiver of the vehicle is traveling above the segment. The enable signal received enables the operation of the segment. If the enable signal is not received or is not received any more within an expected period of time, the segment is not operated, i.e. the alternating current line or lines of the segment do not carry an alternating current for producing the electromagnetic field for providing the vehicle with energy. Although preferred, the enable signal is not necessarily a continuous signal. Rather, the enable signal can be transmitted repeatedly, for example every one or two seconds. A continuous signal is understood to be a signal which is transmitted continuously without any interruption or is transmitted quasi-continuously, according to a working cycle of the signal transmitter. Typically, the working cycle is in the range of some milliseconds. Assuming that a vehicle travels at a speed of 30 m/s and assuming that the length of each segment is in the range of 15 m, a working cycle of less than 0.1 s should be sufficient.

Preferably, the enable signal is only transmitted from the vehicle to the track if at least one pre-determined condition is fulfilled: (a) the temperature of the receiver and/or other components for receiving and using the electromagnetic energy within the vehicle, does not exceed a pre-determined threshold value, and/or (b) the receiver and the system for using the electromagnetic energy within the vehicle is ready for operation. In particular, the condition or conditions are monitored, for example by using corresponding measurement sensors for measuring the temperature or by using a control device which outputs a signal corresponding to the operational state of the system, and the enable signal transmitter is only operated to transmit the enable signal if the monitoring device or system allows the transmission. Allowance can be realized in particular by passing the necessary electric current for operation of the signal transmitter and/or by transmitting a control signal to the signal transmitter. If monitoring comes to the result that the enable signal should not be transmitted to the track, the electric current is not passed, for example by opening a switch or fuse, and/or the control signal which controls the signal transmitter to transmit the enable signal is not transmitted to the signal transmitter and/or a control signal is transmitted to the signal transmitter which instructs the signal transmitter not to transmit the enable signal. "Monitoring" does not necessarily require an intelligent monitoring device. Rather, a temperature sensitive switch and/or fuse can be used as monitoring device only.

In particular, the following is proposed: A system for transferring electric energy to a vehicle, in particular to a track bound vehicle such as a light rail vehicle, wherein
- the system comprises an electric conductor arrangement for producing an alternating electromagnetic field and for thereby transferring electromagnetic energy to the vehicle,
- the conductor arrangement comprises at least one and preferably a plurality of consecutive segments, wherein each segment extends along a different section of the path of travel of the vehicle,
- each segment can be switched on and off separately of any other segment,
- the vehicle comprises at least one receiver for receiving the electromagnetic energy,
- the vehicle comprises at least one signal transmitter adapted to repeatedly or continuously emit an enable signal towards the track,
- a signal receptor is assigned to each segment, wherein the signal receptor enables the segment to produce the alternating electromagnetic field while the signal receptor receives the enable signal, wherein a segment-control is adapted to stop the operation of the segment when the enable signal is no longer received by the signal receptor of the segment,
- the vehicle comprises a transmitter control arrangement adapted to stop transmitting the enable signal if the receiver and/or if any device combined with the receiver is not to be operated.

In addition, a corresponding vehicle is proposed. In particular, the vehicle is to be operated using the system for transferring electric energy to the vehicle of the present invention. The vehicle comprises at least one receiver for receiving electromagnetic energy of an alternating electromagnetic field. Furthermore, the vehicle comprises at least one signal transmitter adapted to repeatedly or continuously emit an enable signal towards the track. A first signal transmitter is arranged - with respect to the direction of travel - in front of the receiver and a second signal transmitter is arranged - with respect to the direction of travel - behind the receiver.

Furthermore, a method for transferring electric energy to a vehicle is proposed, enabling the segment to produce the alternating electromagnetic field while a signal receptor receives the enable signal, wherein the operation of the segment is stopped when the enable signal is no longer received by the signal receptor of the segment.

In particular, the following method is proposed: A method for transferring electric energy to a vehicle, in particular to a track bound vehicle such as a light rail vehicle, wherein
- an alternating electromagnetic field is produced by an electric conductor arrangement located along the track thereby transferring the electromagnetic energy to the vehicle,
- at least one segment or a plurality of consecutive segments of the conductor arrangement are switched on and off separately of other segments in order to generate the electromagnetic field in a restricted region of the path of travel of the vehicle only where the vehicle is traveling, wherein each segment extends along a different section of the path of travel of the vehicle,
- the electromagnetic energy is received using at least one receiver arranged at the vehicle,
- an enable signal is repeatedly or continuously emitted from the vehicle towards the track,
- the segment is enabled to produce the alternating electromagnetic field while a signal receptor receives the enable signal, wherein the operation of the segment is immediately stopped when the enable signal is no longer received by the signal receptor of the segment,
- transmission of the enable signal is stopped if the receiver and/or if any device combined with the receiver is not to be operated.

Stopping the transmission of the enable signal depending on the situation within the vehicle overcomes the disadvantage of the prior-art. If the receiver or any connected device or system is not ready to operate or is overloaded, the enable signal is no longer transmitted, the signal receptor at the track does not receive the enable signal any more and, therefore, the operation of the segment is stopped. As a result, the specific disadvantages of operating the segment at constant current are overcome. In particular, the presence of the vehicle (or the absence of any vehicle) is reliably detected and it cannot happen that operation at constant current is continued while the receiver system in the vehicle is overloaded.

Preferably, the enable signal which is transmitted from the signal transmitter to the track is directed from top to bottom, i.e. downwards, so that the transmitted enable signal cannot be detected or received at other segments which are not located under the signal transmitter. In particular, the signal transmitter is located at a low height level, preferably underneath the car body of the vehicle, for example at the height of a bogie or slightly above a bogie of the vehicle. This ensures that components of the enable signal which might be strayed sideways do not reach other segments than the segment directly below the vehicle.

The transmission of the enable signal may be realized by inductive coupling or by other procedures. Inductive coupling means that the signal is transferred by electromagnetic waves which induce a voltage in a receiving antenna of the segment. Preferably, the signal receptor is realized as a receiving loop having at least one winding of a conductor. Therefore, it is preferred that the signal receptor which is assigned to each segment comprises a loop of an electric conductor, wherein the receiving area is defined by the area surrounded by the loop. If the track is extending in horizontal direction, the area is therefore also a horizontal area. Preferably, the length of the area is equal or nearly equal to the length of the segment. The width of the area maybe in the range of some centimeters and is preferably smaller than 50 cm. A small width has the advantage that the receiving area is less sensitive to stray components of the enable signal, especially stray components of enable signals transmitted from vehicles on parallel tracks do not enable the operation of the segment. More generally speaking, the receiving area extends along the path of travel of the vehicle from the limits of the segment to a preceding segment to the limits of the segment to a following segment. Thereby, the repeatedly or continuously transmitted enable signal is received by the receiving area as long as the signal transmitter travels directly above the segment.

More generally speaking, the signal receptor may comprise a receiving area for receiving the enable signal, wherein the receiving area extends along a section of the path of travel of the vehicle, in particular along a section which has nearly the length of a segment in travel direction. In particular, "nearly" means that the length of the receiving area is equal to the length of the segment plus or minus 20 % of the length of the segment.

The proposed solution has the advantage that a segment is only operated if the signal transmitter is located directly above the segment. If the signal transmitter has been moved from a segment to a consecutive segment the signal receptor of the segment no longer receives the enable signal. Depending on the question if another signal transmitter is located above the segment, or not, the operation of the segment will be stopped.

Preferably, a coded enable signal is transmitted. "Coded" means that the signal comprises a code which is recognized by the signal receptor of the segment. Therefore, other signals which may be received by the signal receptor will not enable the operation of the segment. A preferred procedure of coding the enable signal is Frequency Shift Keying (FSK). This coding procedure is well-known in the art of signal transmission. FSK is a frequency modulation scheme in which digital information is transmitted through discrete frequency changes of a carrier wave. Details of FSK are described in the English version of WIKIPEDIA, the free encyclopedia, for example. However, any other coding scheme can be used.

Preferably, the control arrangement comprises at least one switch and/or fuse adapted to prevent the signal transmitter from emitting the enable signal, wherein the at least one switch and/or fuse is/are responsive to at least one of the following: temperature of the receiver, temperature of a current converter for converting an electric current produced by the receiver, operability of the receiver, of the current converter and/or of a system of the vehicle which uses the electromagnetic energy received by the receiver. Further details of the monitoring have been explained above. In particular, operability is not given for example if any device is overloaded and/or if the driver or a control center has not given permission to operate the vehicle using the energy from the segment or from the consecutive segments.

The line or lines which are interrupted by the switch and/or fuse may be control signal line(s) or line(s) for providing the signal transmitter with electric energy. In particular, the line may be a first line energizing a relay thereby keeping the relay in a closed state while the enable signal is transmitted, wherein the relay is de-energized and therefore in the open state interrupting a second line to the at least one signal transmitter if the first line is interrupted.

If the switch and/or fuse opens (i.e. interrupts) a line and, therefore, the signal transmitter no longer emits the enable signal, the operation of the segment is stopped. The switch and/or fuse are preferably effective with all signal transmitters which are assigned to the receiver. For example, two signal transmitters may be assigned to the receiver, one in front of the receiver and one behind the receiver with respect to the direction of travel. Both signal transmitters are switched off or are disabled if the switch and/or fuse opens the line.

As mentioned before, a first signal transmitter is arranged - with respect to the direction of travel - in front of the receiver, so that the enable signal emitted by the first signal transmitter enables a segment before the receiver is reaching the segment. Reaching the segment means that the receiver reaches a location directly above the segment. Furthermore, a second signal transmitter is arranged - with respect to the direction of travel - behind the receiver, so that the enable signal of the second signal transmitter continues enabling the segment until the receiver is leaving the segment. Leaving the segment means that the receiver is no longer located directly above the segment. As a result of this arrangement, the segment may be operated shortly before the receiver reaches the segment and is still operated, for a short period of time, after the receiver has left the segment. Therefore, it is preferred that the receiver is located at a distance to the front of the vehicle and at a distance to the back of the vehicle - with respect to the direction of travel. The segment is at least partly covered by the vehicle before the receiver reaches the vehicle and is at least partly covered by the vehicle when the receiver has left the segment, but is still enabled because the enable signal of the second signal transmitter is received.

It is particularly preferred that the sections of the path of travel (along which the segments extend) are shorter than the length of a vehicle on the track in the travel direction and that the system is adapted to operate (and in particular to switch on) segments only if a vehicle is occupying the respective section of the track where the segment is located. Since only segments under the vehicle are switched on, the vehicle shields the environment from the electromagnetic field which is produced by the conductor arrangement. For example, the length of the segments may be dimensioned in such a manner, that at least two of the segments are covered lengthwise by a vehicle on the track, i.e. the minimum length of a vehicle on the track is twice as long as the length of one segment. Preferably, all line segments have the same length. Correspondingly, the receiving device or receiving devices of the vehicle for receiving the transferred energy may be located in the middle section of the vehicle in lengthwise direction. Preferably, only segments are operated which are fully occupied by a vehicle, i.e. - in lengthwise direction along the path of travel - the operated segments do not extend beyond the front of the vehicle and do not extend beyond the end of the vehicle.

Most preferred, segments are operated in such a manner that there is continuous transfer of electric energy from the segments to the vehicle while the vehicle is travelling along the path of travel. This means that a first segment which is occupied by the vehicle may be operated, and before the vehicle (or before the receiving device of the vehicle) enters the next following segment, this next following segment is switched on. On the other hand, the first segment may be switched off after the vehicle has left the corresponding section of the path of travel.

The number of consecutive segments which are operated at the same time is not restricted to two. Rather, three or more consecutive segments can be operated at the same time, for example if a long vehicle is traveling on the path, such as a vehicle having receiving devices at different locations. In this case, it is preferred that segments are switched off only when the last receiving device has left the section of the path which corresponds to the segment.

The preferred embodiments which are described in the preceding paragraphs can be realized easily with the arrangement having one signal transmitter in front of the receiver and one signal transmitter behind the receiver, both transmitters emit an enable signal to the track and a segment which receives any of the enable signals is enabled.

Each segment may comprise a segment control which is connected to the signal receptor. Either the signal receptor or the segment control is adapted to detect the reception of the enable signal. If the signal is coded, the detection of the reception includes the determination that the code is the expected code of an enable signal.

A segment is understood to be a part of the conductor arrangement, wherein each segment can produce an electromagnetic field for transferring energy to a vehicle, provided that the segment is switched on, i.e. is operated. In particular, each segment may consist of sections of the at least two lines of the conductor arrangement, wherein each line is adapted to carry a different one of the phases of the alternating electric current.

Preferably, the electric conductor arrangement comprises three lines, each line carrying a different phase of a three-phase alternating current. However, it is also possible, that there are only two or more than three-phases carried by a corresponding number of lines. In particular, each of the segments may comprise sections of each of the lines, so that each segment produces an electromagnetic field which is caused by the three phases.

The process of switching the segments on and off may be controlled by interrupting or connecting the connection between a power supply line and at least one of the lines of the segments which carry the phases of the alternating current and/or by switching on or off a current converter which converts (in particular inverts) a current in the power supply line to an alternating current in the segment.

Embodiments and examples of the invention will be described with reference to the attached figures. The figures show:
- Fig. 1: an arrangement comprising a track for a rail vehicle and the vehicle, wherein the track is equipped with a plurality of segments for producing electromagnetic fields,
- Fig. 2: an enlarged view of the vehicle and parts of the track of Fig. 1,
- Fig. 3: a preferred embodiment of a signal transmitter for transmitting an enable signal from the vehicle to the track, wherein the figure also shows a control arrangement for controlling the operation of the transmitter,
- Fig. 4: an arrangement for processing received signals at the track.

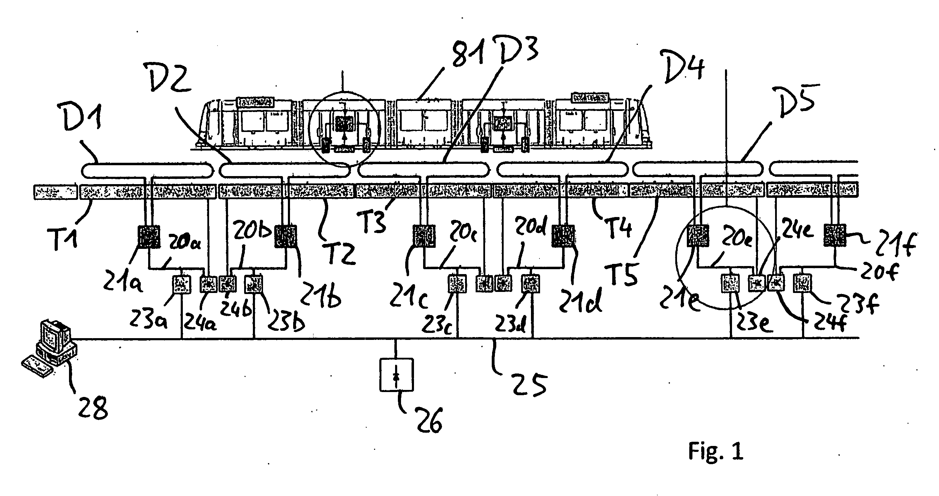

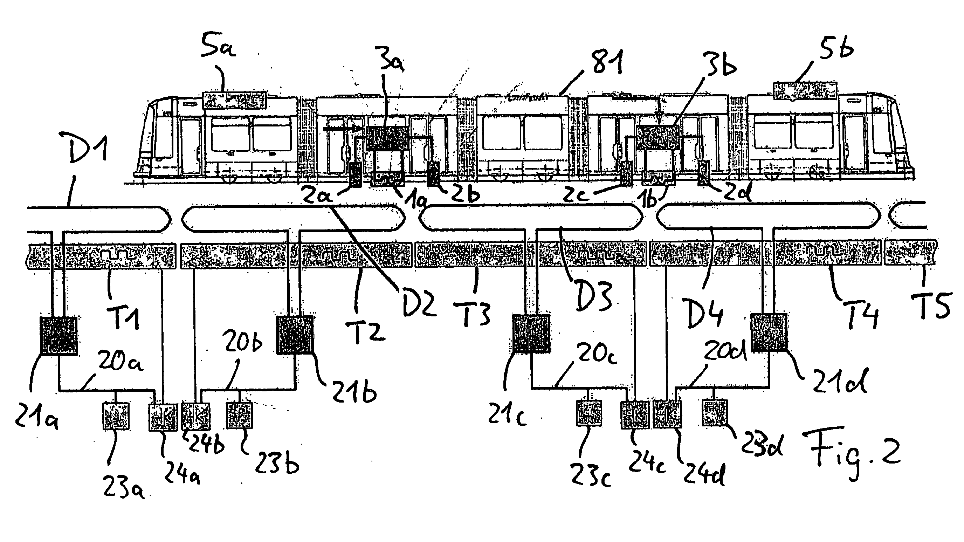

Fig. 1 shows a vehicle 81, in particular a light rail vehicle, such as a tram. In this specific embodiment, the tram comprises two receivers 1a, 1b for receiving electromagnetic fields which are produced by the track. The receivers 1a, 1 b are located at the bottom of the vehicle 81, in a middle section of the front part and back part of the vehicle 81. The receivers can be seen best in the schematic side view of Fig. 2. The vehicle may have any other number of receivers.

The receivers 1a, 1b are connected with other equipment within the vehicle 81, such as with a converter (not shown) for converting an alternating current produced by the receiver 1 to a direct current. For example, the direct current can be used to charge batteries or other energy storages 5a, 5b of the vehicle 81.

The receivers 1a, 1b are connected with a control device 3a, 3b for controlling the operation of signal transmitters 2a, 2b, 2c, 2d which are also located at the bottom of the vehicle 81, so that signals emitted by the signal transmitters are emitted downwards towards the track. There is in each case one signal transmitter 2a, 2c behind the receiver 1a, 1 b - with respect to the direction of travel (the direction of travel extends towards the right in Fig. 1 and Fig. 2) - and in each case one signal transmitter 2b, 2d in front of the receiver 1 a, 1 b. The signal transmitters are also connected to the control device 3a, 3b.

The track comprises a series of consecutive segments T1, T2, T3, T4, T5 which can be operated separately of each other and which produce during operation an electromagnetic field in order to transfer energy to the vehicle 81. Each segment extends across a section of the path of travel of the vehicle. In addition, there is a loop D1, D2, D3, D4, D5 also extending along the section of the corresponding segment T. Each loop D is a single or multiple loop of an electric conductor. Electromagnetic waves produced by the signal transmitters 2 induce a corresponding electric voltage in the loop D. Each loop D is connected to a signal decoder 21a, 21b, 21c, 21d, 21e, 21f at the track for decoding any signal which is transferred to the loop D using the electromagnetic wave. The signal decoder 21 is connected to a control device 23a, 23b, 23c, 23d, 23e, 23f for controlling the operation of the corresponding segment T.

Fig. 1 also shows a connection from each control device 23 to an inverter 24a, 24b, 24c, 24d, 24e, 24f. Furthermore, each control device 23 is connected to a power supply line 25 which may also be used as a control line for controlling the operation of the control devices 23, in particular to enable or disable the control performed by the control devices 23. The power supply line 25 is connected to a power supply 26 for producing direct current. If the power supply line 25 is also used as control line, a central control unit 28 is connected to the line 25.

The operation of the arrangement shown in Fig. 1 and Fig. 2 is as follows: While the vehicle 81 travels on the track, the transmitters 2 continuously or repeatedly emit an enable signal towards the track. For example, the signal transmitter 2a shown in Fig. 2 emits an enable signal which is received by the loop D2. The signal causes a corresponding alternating voltage by induction in the loop D2. Other wireless technologies of transferring and receiving may be used instead. Since the enable signal emitted by signal transmitter 2a is a coded signal, the decoder 21 b which is connected to the loop D2 detects that the received signal is the expected coded signal. Therefore, the decoder 21b outputs a signal to control device 23b so that the control device 23b receives the information that the expected coded signal is received. As long as the signal transmitter 2a travels directly above the loop D2, this process is repeated.

Optionally, the control device 23b may receive a further enable or disable signal from the central control unit 28. If it receives a disable signal, control device 23b does not control the segment T2 to operate. However, if the control device 23b receives an enable signal from the central control unit 28 and - at the same time, receives the information from the decoder 21b that the expected coded signal is received, it controls the inverter 24b to produce an alternating current through the segment T2 so that an electromagnetic field is produced by the segment T2.

The operation of the other segments T is the same as for segment T2. The other segments T are also connected to an inverter 24 which is controlled by a control device 23 depending on the detection result of decoder 21 which receives or does not receive a signal from the connected loop D. In case of the situation shown in Fig. 1 and Fig. 2, the segments T2, T3, T4 are operated to produce an electromagnetic field, since the signal transmitters 2a, 2b, 2c, 2d are traveling above the corresponding loops D2, D3, D4.

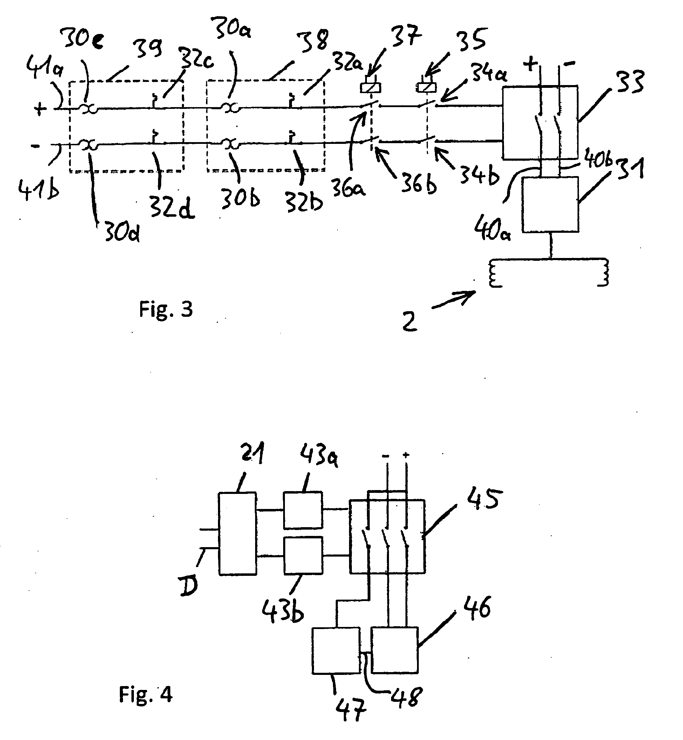

In the following, a preferred embodiment of a control device for controlling the operation of signal transmitters is described. The control device shown in Fig. 3 maybe, for example the control device 3a or 3b of Fig. 1 and Fig. 2.

The signal transmitter 2 is schematically shown on the right hand side in Fig. 3. It is connected to a signal encoder 31 which produces a code which is pre-determined so that a corresponding signal decoder (for example signal decoder 21 of Fig. 1 and Fig. 2) can decode and recognize the expected signal. The signal encoder 31 is provided with electric energy from a source not shown in Fig. 3, but the plus and minus potential lines to encoder 31 are symbolized by a "+" and a "-" sign in Fig. 3. These two lines 40a, 40b are connected to a relay 33 which is adapted to interrupt line 40a and/or 40b depending on the operational state of a control arrangement shown on the left of relay 33.

The control arrangement comprises two lines, a first line 41 a marked with "+" and a second line 41 b marked with "-". In the preferred embodiment shown in Fig. 3, the interruption of one of lines 41 a, 41 b is sufficient to trigger relay 33 to interrupt both lines 40a, 40b. If lines 40 are interrupted, encoder 31 does not operate and, therefore, signal transmitter 2 does not emit a coded signal. It may produce an electromagnetic wave, but this wave is not coded by the expected signal. The first and second line 41 a, 41 b comprise the same type of elements. These elements and the lines 41a, 41 b are redundant in order to increase reliability and safety. Block 39 comprises a switch 32c in line 41a and acorresponding switch 32d in line 41b which are adapted to switch off (i.e. interrupt) the corresponding line 41 if an over-temperature (i.e. a temperature above a pre-determined threshold) is detected in the range of a converter which is connected to the receiver 1. The converter is, in particular, a rectifier for producing a direct current from the alternating current produced by the receiver 1. The temperature sensor which causes the switch 32 to interrupt line 41 may be a separate temperature sensor connected to the switch 32 or may be integrated in switch 32.

The block 39 also comprises a fuse 30c, 30d in each of the first and second line 41 a, 41b which is also responsive to over-temperature. However, the temperature which will cause the fuse 30 to melt and thereby to interrupt line 41 is preferably higher than the predetermined temperature which causes switch 32 to open. Therefore, a smaller over-temperature which may happen more often will only cause one of the switches or both switches 32 to open, but will not melt the fuse or fuses 30.

The block 39 is not necessarily an arrangement of parts fixed to each other, but it maybe such an arrangement. The same applies to the block 38 which is described in the following:

Block 38 comprises the same type of elements as block 39, but the temperature sensitive switches 32a in line 41a and 32b in line 41b and the fuses 30a in line 41a and 30b in line 41 b are sensitive to an over-temperature of the receiver 1. The function of the elements 30, 32 corresponds to the function of switches 32 and fuses 30 as explained above.

There may be further blocks similar to blocks 38, 39, if other devices, which are combined with the receiver, are to be monitored for over-temperature.

In addition, the control arrangement shown in Fig. 3 comprises a relay 36a, 36b having a signal input 37 for receiving a signal (in particular a digital signal) from the control system of the vehicle. The signal contains the information if or if not the receiver system comprising the receiver 1 is ready to operate. If the signal contains the information that the system is not ready to operate or - according to an alternative embodiment - there is no signal containing the information that the system is ready to operate, the relay 36 is in the open state so that the lines 41 a, 41 b are interrupted.

A similar arrangement, namely a relay 34a, 34b having a control signal input 35 is adapted to receive a control signal (preferably a digital signal) containing the information if or if not the vehicle is ready to be provided with electromagnetic energy from the track. For example, the driver of the vehicle or a control center for controlling the operation of the track may output the control signal to signal input 35. If the vehicle is not ready to receive energy by induction from the track, the relay 34a, 34b is in the open state so that lines 41 a, 41 b are interrupted.

As a result, the relay 33 is only closed so that the signal encoder 31 can operate, if there is no over-temperature of the receiver and of the converter and if the receiver system, including the converter is ready to operate and if a control signal indicating that the vehicle is ready to receive electromagnetic field energy from the track is input to the relay 34. In all other cases, at least one of the lines 41 a, 41 b is interrupted so that relay 33 is in the open state.

Fig. 3 is a preferred example. Modifications are possible. In particular, it is possible that the control arrangement only comprises one control line 41. In addition or alternatively, the control line 41 or the control lines 41 a, 41 b may comprise additional switches or relays the switching state of which depends on further control information or operational data of the vehicle. Alternatively, the control line 41 or the control lines 41 a, 41 b may comprise less elements than shown in Fig. 3. For example, one or both relays 34, 36 may be omitted. Each combination of the elements shown in Fig. 3 is possible, for example just an over-temperature fuse 30 of the receiver, but no other of the elements shown in Fig. 3.

Fig. 4 shows the signal decoder 21, for example the signal decoder 21b of Fig. 1 and 2. On the left hand side in Fig. 4, the decoder 21 is connected to loop D. Depending on the question if decoder 21 receives the expected coded signal, it outputs a signal to a relay 45. Optionally, as shown in Fig. 4, additional elements 43a, 43b may be arranged in the connection between decoder 21 and relay 45. For example, these additional elements may be capacities or other devices for increasing or modifying the signal from the decoder 21 to relay 45.

The specific embodiment shown in Fig. 4 comprises two connections from the decoder 21 to relay 45. The reason is that one of the connections might fail. A second, redundant connection improves reliability.

The relay 45 in the specific embodiment shown has three switches corresponding to three output lines {shown at the bottom of relay 45). In other embodiments, the relay 45 may have a different number of output connections. For example, a single output connection to inverter 24 (see Fig. 1 and Fig. 2) is sufficient. However, the arrangement shown in Fig. 4 is preferred, since it is more reliable.

Two of the output connections of relay 45 serve to connect the relay 45 with an inverter gate drive 46, for example an inverter gate drive of inverter 24b of Fig. 1 and Fig. 2. An inverter gate drive is the part of the control device of an inverter which directly controls the operation of gates, i.e. controls electrodes of electronic switches which are used to operate the inverter.

The third output of relay 45 serves to connect relay 45 to the inverter control 47 of the same inverter. The inverter control is the part of the inverter which controls the inverter gate drives. Consequently, there is a control connection 48 between the inverter control and the inverter gate drive. Since the inverter of a three-phase application typically has six electronic switches, preferably all inverter gate drives are directly connected to an output of relay 45. The two control lines from relay 45 to inverter gate drive 46 shown in Fig. 4 are just examples.

If relay 45 is in the closed state, all outputs of relay 45 are connected to an energy source, as indicated by "+" and "-" in Fig. 4. This is the case, if decoder 21 receives the expected coded signal and, accordingly, outputs a signal to relay 45 to close the switches. Otherwise, if the signal decoder 21 does not receive the expected coded signal from the loop D, it does not output a signal to relay 45 or, alternatively, it outputs a open signal to open relay 45, so that relay 45 is in the open state and none of the output lines of relay 45 is connected to the energy source. Therefore, the inverter cannot be operated and will not provide an alternating current to the segment T.

## Claims

1. A system for transferring electric energy to a vehicle (81),wherein
- the system comprises an electric conductor arrangement for producing an alternating electromagnetic field and for thereby transferring electromagnetic energy to the vehicle (81),
- the conductor arrangement comprises at least one and preferably a plurality of consecutive segments (T1, T2, T3, T4, T5), wherein each segment (T1, T2, T3, T4, T5) extends along a different section of the path of travel of the vehicle (81),
- each segment (T1, T2, T3, T4, T5) can be switched on and off separately of any other segment,
- the vehicle (81) comprises at least one receiver (1) for receiving the electromagnetic energy,
- the vehicle (81) comprises at least one signal transmitter (2) adapted to emit an enable signal towards the track,
- the vehicle (81) comprises a transmitter control arrangement,
- a signal receptor (D1, D2, D3, D4) is assigned to each segment (T1, T2, T3, T4, T5),
- the at least one signal transmitter (2) is adapted to repeatedly or continuously emit the enable signal towards the track,
- the signal receptor (D1, D2, D3, D4) is adapted to enable the segment to produce the alternating electromagnetic field while the signal receptor (D1, D2, D3, D4) receives the enable signal, wherein a segment control (3) is adapted to stop the operation of the segment when the enable signal is no longer received by the signal receptor (D1, D2, D3, D4) of the segment,
**characterized in that**, the transmitter control arrangement is adapted to stop transmitting the enable signal if the receiver and/or if any device combined with the receiver is not to be operated,
- a first signal transmitter (2b) is arranged - with respect to the direction of travel - in front of the receiver (1), so that the enable signal emitted by the first signal transmitter (2b) enables a segment (T2) before the receiver (1) is reaching the region above the segment (T2), and a second signal transmitter (2a) is arranged
- with respect to the direction of travel - behind the receiver (1), so that the enable signal of the second signal transmitter (2a) continues to enable the segment (T2) until the receiver (1) is leaving the region above the segment (T2).

2. The system of claim 1, wherein the signal receptor (D1, D2, D3, D4) comprises a receiving area for receiving the enable signal, wherein the receiving area extends along a section of the path of travel of the vehicle (81).

3. The system of claim 1 or 2, wherein the control arrangement (3) comprises at least one switch (32) and/or fuse (30) adapted to prevent the signal transmitter (2) from emitting the enable signal, wherein the at least one switch (32) and/or fuse (30) is/are responsive to at least one of the following: temperature of the receiver, temperature of a current converter for converting an electric current produced by the receiver, operability of the receiver, of the current converter and/or of a system of the vehicle which uses the electromagnetic energy received by the receiver.

4. The system of claim 3, wherein the switch (32) and/or fuse (30) is/are arranged in a line (41) and are adapted to interrupt the line (41) if the at least one signal transmitter (2) is to be prevented from emitting the enable signal.

5. The system of claim 4, wherein the line (41) is a first line energizing a relay (33) thereby keeping the relay (33) in a closed state while the enable signal is transmitted and wherein the relay (33) is de-energized and therefore in the open state interrupting a second line (40) to the at least one signal transmitter (2) if the first line (41) is interrupted.

6. A vehicle (81) for operation using the system of one of the preceding claims,
wherein
- the vehicle (81) comprises at least one receiver (1) for receiving the electromagnetic energy of an alternating electromagnetic field,
- the vehicle (81) comprises at least one signal transmitter (2) adapted to emit an enable signal towards the track for enabling the generation of the alternating electromagnetic field,
- the vehicle (81) comprises a transmitter control arrangement (3),
- the at least one signal transmitter (2) is adapted to repeatedly or continuously emit the enable signal towards the track,
- the transmitter control arrangement (3) is adapted to stop transmitting the enable signal if the receiver (1) and/or if any device combined with the receiver (1) is not to be operated,
**characterized in that**,
- a first signal transmitter (2b) is arranged - with respect to the direction of travel - in front of the receiver (1), so that the enable signal emitted by the first signal transmitter (2b) enables a segment (T2) before the receiver (1) is reaching the region above the segment (T2), and a second signal transmitter (2a) is arranged
- with respect to the direction of travel - behind the receiver (1), so that the enable signal of the second signal transmitter (2a) continues to enable the segment (T2) until the receiver (1) is leaving the region above the segment (T2).

7. The vehicle of claim 6, wherein the control arrangement (3) comprises at least one switch (32) and/or fuse (30) adapted to prevent the signal transmitter (2) from emitting the enable signal, wherein the at least one switch (32) and/or fuse (30) is/are responsive to at least one of the following: temperature of the receiver, temperature of a current converter for converting an electric current produced by the receiver, operability of the receiver, of the current converter and/or of a system of the vehicle which uses the electromagnetic energy received by the receiver.

8. The vehicle of claim 7, wherein the switch (32) and/or fuse (30) is/are arranged in a line (41) and are adapted to interrupt the line (41) if the at least one signal transmitter (2) is to be prevented from emitting the enable signal.

9. The vehicle of claim 8, wherein the line (41) is a first line energizing a relay (33) thereby keeping the relay (33) in a closed state while the enable signal is transmitted and wherein the relay (33) is de-energized and therefore in the open state interrupting a second line (40) to the at least one signal transmitter (2) if the first line (41) is interrupted.

10. A method for transferring electric energy to a vehicle (81), wherein
- an alternating electromagnetic field is produced by an electric conductor arrangement located along a track thereby transferring the electromagnetic energy to the vehicle (81),
- at least one segment or a plurality of consecutive segments (T1, T2, T3, T4, T5) of the conductor arrangement are switched on and off separately of other segments (T1, T2, T3, T4, T5) in order to generate the electromagnetic field in a restricted region of a path of travel of the vehicle only where the vehicle (81) is traveling, wherein each segment (T1, T2, T3, T4, T5) extends along a different section of the path of travel of the vehicle (81),
- the electromagnetic energy is received using at least one receiver (1) arranged at the vehicle (81),
- an enable signal is transmitted from the vehicle towards the track,
- the segment is enabled to produce the alternating electromagnetic field
- the enable signal is repeatedly or continuously emitted from the vehicle towards the track,
- the segment is enabled while a signal receptor (D1, D2, D3, D4) receives the enable signal, wherein the operation of the segment (T1, T2, T3, T4, T5) is stopped when the enable signal is no longer received by the signal receptor (D1, D2, D3, D4) of the segment (T1, T2, T3, T4, T5),
**characterized in that**,
- transmission of the enable signal is stopped if the receiver (1) and/or if any device combined with the receiver (1) is not to be operated,
- a first enable signal is transmitted from a first location- with respect to the direction of travel - in front of the receiver by a first signal transmitter (2b), so that the enable signal emitted by the first signal transmitter (2b) enables a segment (T2) before the receiver (1) is reaching a region above the segment (T2), and a second enable signal is transmitted from a second location - with respect to the direction of travel - behind the receiver by a second signal transmitter (2a), so that the enable signal of the second signal transmitter (2b) continues to enable the segment (T2) until the receiver (1) is leaving the region above the segment (T2).

11. The method of claim 10, wherein the enable signal is no longer emitted if one or more than one of the following events happen(s): a temperature of the receiver (1) exceeds a predetermined maximum value; a temperature of a current converter for converting an electric current produced by the receiver exceeds a predetermined maximum value; the receiver, the current converter and/or a system of the vehicle which uses the electromagnetic energy received by the receiver are not ready to be operated.

12. The method of claim 10 or 11, wherein a switch (32) and/or fuse (30) is/are used to interrupt a line (41) if the at least one signal transmitter (2) is to be prevented from emitting the enable signal.

13. The method of claim 12, wherein the line (41) is a first line used to energizing a relay (33) thereby keeping the relay (33) in a closed state while the enable signal is transmitted and wherein the relay (33) is de-energized and therefore in the open state interrupting a second line (40) to the at least one signal transmitter (2) if the first line (41) is interrupted.

14. The method of one of claims 10-13, wherein an alternating current of constant magnitude is produced in each segment (T1, T2, T3, T4, T5) while the segment is operated.

## Patentansprüche

1. System zum Übertragen elektrischer Energie auf ein Fahrzeug (81), wobei
- das System eine elektrische Leiteranordnung zum Erzeugen eines elektromagnetischen Wechselfeldes und zum dadurch Übertragen von elektromagnetischer Energie zu dem Fahrzeug (81) aufweist,
- die Leiteranordnung zumindest ein und vorzugsweise eine Mehrzahl von aufeinanderfolgenden Segmenten (T1, T2, T3, T4, T5) aufweist, wobei jedes Segment (T1, T2, T3, T4, T5) sich entlang einem verschiedenen Abschnitt des Fahrweges des Fahrzeugs (81) erstreckt,
- jedes Segment (T1, T2, T3, T4, T5) separat von etwaigem anderem Segment ein- und ausgeschaltet werden kann,
- das Fahrzeug (81) zumindest einen Empfänger (1) zum Empfangen der elektromagnetischen Energie aufweist,
- das Fahrzeug (81) zumindest einen Signal-Sender (2) aufweist, der ausgestaltet ist, ein Freigabesignal zu der Strecke zu emittieren,
- das Fahrzeug (81) eine Sender-Steueranordnung aufweist,
- jedem Segment (T1, T2, T3, T4, T5) ein Signal-Empfänger (D1, D2, D3, D4) zugeordnet ist,
- der zumindest eine Signal-Sender (2) ausgestaltet ist, wiederholt oder kontinuierlich das Freigabe-Signal zu der Strecke zu emittieren,
- der Signal-Empfänger (D1, D2, D3, D4) ausgestaltet ist, dem Segment freizugeben, das elektromagnetische Wechselfeld zu erzeugen, während der Signal-Empfänger (D1, D2, D3, D4) das Freigabe-Signal empfängt, wobei eine Segment-Steuerung (3) ausgestaltet ist, den Betrieb des Segments zu stoppen, wenn das Freigabe-Signal nicht länger von dem Signal-Empfänger (D1, D2, D3, D4) des Segments empfangen wird,
**dadurch gekennzeichnet, dass**
- die Sender-Steueranordnung ausgestaltet ist, das Senden des Freigabe-Signals zu stoppen, falls der Empfänger und/oder falls eine etwaige Einrichtung, die mit dem Empfänger kombiniert ist, nicht zu betreiben ist,
- ein erster Signal-Sender (2b) - in Bezug auf die Fahrtrichtung - vor dem Empfänger (1) angeordnet ist, sodass das Freigabe-Signal, welches von dem ersten Signal-Sender (2b) emittiert wird, ein Segment (T2) freigibt, bevor der Empfänger (1) den Bereich über dem Segment (T2) erreicht, und ein zweiter Signal-Sender (2a) - in Bezug auf die Fahrtrichtung - hinter dem Empfänger (1) angeordnet ist, sodass das Freigabe-Signal des zweiten Signal-Senders (2a) fortgesetzt das Segment (T2) freigibt, bis der Empfänger (1) den Bereich über dem Segment (T2) verlässt.

2. System nach Anspruch 1, wobei der Signal-Empfänger (D1, D2, D3, D4) einen Empfangsbereich zum Empfangen des Freigabesignals, wobei der Empfangsbereich sich über einen Abschnitt der Fahrstrecke des Fahrzeugs (81) erstreckt.

3. System nach Anspruch 1 oder 2, wobei die Steueranordnung (3) einen Schalter (32) und/oder Sicherung (30) aufweist, die ausgestaltet ist zu verhindern, dass der Signal-Sender das Freigabe-Signal emittiert, wobei der zumindest eine Schalter (32) und/oder Sicherung (30) ausgestaltet ist/sind, auf zumindest eines der Folgenden zu reagieren: Temperatur des Empfängers, Temperatur eines Stromwandler zum Umwandeln eines vom Empfänger erzeugten elektrischen Stroms, Operabilität des Empfängers, des Stromwandlers und/oder eines Systems des Fahrzeugs, das die vom Empfänger empfangene elektromagnetische Energie nutzt.

4. System nach Anspruch 3, wobei der Schalter (32) und/oder die Sicherung (30) in einer Leitung (41) angeordnet ist/sind und ausgestaltet sind, die Leitung (41) zu unterbrechen, wenn es verhindert werden soll, dass der zumindest eine Signal-Sender (2) das Freigabe-Signal emittiert.

5. System nach Anspruch 4, wobei die Leitung (41) eine erste Leitung ist, die ein Relais (33) erregt und dadurch das Relais (33) in einem geschlossenen Zustand hält, während das Freigabe-Signal gesendet wird, und wobei das Relais (33) entregt ist und daher in dem geöffnetem Zustand ist und eine zweite Leitung (40) zu dem zumindest einen Signal-Empfänger (2) unterbricht, wenn die erste Leitung (41) unterbrochen ist.

6. Fahrzeug (81), zum Betrieb unter Nutzung des Systems nach einem der vorhergehenden Ansprüche, wobei
- das Fahrzeug (81) zumindest einen Empfänger (1) zum Empfangen der elektromagnetischen Energie eines elektromagnetischen Wechselfeldes aufweist,
- das Fahrzeug (81) zumindest einen Signal-Sender (2) aufweist, der ausgestaltet ist, ein Freigabesignal zu der Strecke zu emittieren, um die Erzeugung das elektromagnetisches Wechselfeldes freizugeben,
- das Fahrzeug (81) eine Sender-Steueranordnung (3) aufweist,
- der zumindest eine Signal-Sender (2) ausgestaltet ist, wiederholt oder kontinuierlich das Freigabesignal zu der Strecke zu emittieren,
- die Sender-Steueranordnung (3) ausgestaltet ist, das Senden des Freigabe-Signals zu stoppen, falls der Empfänger und/oder falls eine etwaige Einrichtung, die mit dem Empfänger (1) kombiniert ist, nicht zu betreiben ist,
**dadurch gekennzeichnet, dass**
- ein erster Signal-Sender (2b) - in Bezug auf die Fahrtrichtung - vor dem Empfänger (1) angeordnet ist, sodass das Freigabe-Signal, welches von dem ersten Signal-Sender (2b) emittiert wird, ein Segment (T2) freigibt, bevor der Empfänger (1) den Bereich über dem Segment (T2) erreicht, und ein zweiter Signal-Sender (2a) - in Bezug auf die Fahrtrichtung - hinter dem Empfänger (1) angeordnet ist, sodass das Freigabe-Signal des zweiten Signal-Senders (2a) fortgesetzt das Segment (T2) freigibt, bis der Empfänger (1) den Bereich über dem Segment (T2) verlässt.

7. Fahrzeug nach Anspruch 6, wobei die Steueranordnung (3) zumindest einen Schalter (32) und/oder eine Sicherung (30) aufweist, der/die ausgestaltet ist, zu verhindern, dass der Signal-Sender (2) das Freigabe-Signal emittiert, wobei der/die zumindest eine Schalter (32) und/oder Sicherung (30) ausgestaltet ist/sind, auf zumindest eines der Folgenden zu reagieren: Temperatur des Empfängers, Temperatur eines Stromwandlers zum Umwandeln eines vom Empfänger erzeugten elektrischen Stroms, Operabilität des Empfängers, des Stromwandlers und/oder eines Systems des Fahrzeugs, das die vom Empfänger empfangene elektromagnetische Energie nutzt.

8. Fahrzeug nach Anspruch 7, wobei der Schalter (32) und/oder die Sicherung (30) in einer Leitung (41) angeordnet ist/sind und ausgestaltet sind, die Leitung (41) zu unterbrechen, wenn verhindert werden soll, dass der zumindest eine Signal-Sender (2) das Freigabe-Signal emittiert.

9. Fahrzeug nach Anspruch 8, wobei die Leitung (41) eine erste Leitung ist, die ein Relais (33) erregt und dadurch das Relais (33) in einem geschlossenen Zustand hält, während das Freigabe-Signal gesendet wird, und wobei das Relais (33) entregt ist und daher in dem geöffnetem Zustand ist und eine zweite Leitung (40) zu dem zumindest einen Signal-Empfänger (2) unterbricht, wenn die erste Leitung (41) unterbrochen ist.

10. Verfahren zum Übertragen elektrischer Energie auf ein Fahrzeug (81), wobei
- ein elektromagnetisches Wechselfeld durch eine entlang einer Fahrstrecke angeordnete elektrische Leiteranordnung erzeugt wird und dadurch elektromagnetische Energie zum Fahrzeug (81) übertragen wird,
- zumindest ein Segment oder eine Mehrzahl von aufeinanderfolgenden Segmenten (T1, T2, T3, T4, T5) der Leiteranordnung separat von anderen Segmenten (T1, T2, T3, T4, T5) ein- und ausgeschaltet wird/werden, um das elektromagnetische Feld nur in einem begrenzten Bereich des Fahrweges des Fahrzeugs, wo sich das Fahrzeug fortbewegt, zu erzeugen, wobei jedes Segment (T1, T2, T3, T4, T5) sich entlang einem verschiedenen Abschnitt des Fahrweges des Fahrzeugs (81) erstreckt,
- die elektromagnetische Energie unter Nutzung zumindest eines Empfängers (1) empfangen wird, der an dem Fahrzeug (81) angeordnet ist,
- ein Freigabe-Signal vom Fahrzeug zu der Strecke gesendet wird,
- das Segment freigegeben wird, um das elektromagnetische Wechselfeld zu erzeugen,
- das Freigabe-Signal wiederholt oder kontinuierlich von dem Fahrzeug zu der Strecke emittiert wird,
- das Segment freigegeben wird, während ein Signal-Empfänger (D1, D2, D3, D4) das Freigabe-Signal empfängt, wobei der Betrieb des Segments (T1, T2, T3, T4, T5) gestoppt wird, wenn das Freigabe-Signal nicht mehr vom Signal-Empfänger (D1, D2, D3, D4) des Segments (T1, T2, T3, T4, T5) empfangen wird,
**dadurch gekennzeichnet, dass**
- Senden des Freigabe-Signals gestoppt wird, falls der Empfänger (1) und/oder eine etwaige Einrichtung, die mit dem Empfänger (1) kombiniert ist, nicht zu betreiben ist,
- ein erstes Freigabe-Signal von einem ersten Ort - in Bezug auf die Fahrtrichtung-vor dem Empfänger von einem ersten Signal-Sender (2b) gesendet wird, sodass das Freigabe-Signal, welches von dem ersten Signal-Sender (2b) emittiert wird, ein Segment (T2) freigibt, bevor der Empfänger (1) einen Bereich über dem Segment (T2) erreicht, und ein zweites Freigabe-Signal von einem zweiten Ort - in Bezug auf die Fahrtrichtung - hinter dem Empfänger von einem zweiten Signal-Sender (2a) gesendet wird, sodass das Freigabe-Signal des zweiten Signal-Senders (2b) fortgesetzt das Segment (T2) freigibt, bis der Empfänger (1) den Bereich über dem Segment (T2) verlässt.

11. Verfahren nach Anspruch 10, wobei das Freigabe-Signal nicht mehr emittiert wird, falls ein oder mehr als eines der folgenden Ereignisse eintritt/eintreten: eine Temperatur der Empfängers (1) übersteigt einen vordefinierten Maximalwert; eine Temperatur eines Stromwandlers zum Wandeln eines vom Empfänger erzeugten elektrischen Stroms übersteigt einen vordefinierten Maximalwert; der Empfänger, der Stromwandler und/oder ein System des Fahrzeugs, der/das die vom Empfänger empfangene elektromagnetische Energie nutzt, sind nicht bereit betrieben zu werden.

12. Verfahren nach Anspruch 10 oder 11, wobei ein Schalter (32) und/oder eine Sicherung (30) wird/werden dazu genutzt, eine Leitung (41) zu unterbrechen, falls es verhindert werden soll, dass der zumindest eine Signal-Sender (2) das Freigabe-Signal emittiert.

13. Verfahren nach Anspruch 12, wobei die Leitung (41) eine erste Leitung ist, die genutzt wird, ein Relais (33) zu erregen und dadurch das Relais (33) in einem geschlossenen Zustand zu halten, während das Freigabe-Signal gesendet wird, und wobei das Relais (33) entregt wird und daher in dem geöffneten Zustand ist und eine zweite Leitung (40) zu dem zumindest einen Signal-Sender (2) unterbricht, falls die erste Leitung (41) unterbrochen wird.

14. Verfahren nach einem der Ansprüche 10-13, wobei in jedem Segment (T1, T2, T3, T4, T5) ein Wechselstrom konstanter Größe erzeugt wird, während das Segment betrieben wird.

## Revendications

1. Système pour transférer de l'énergie électrique à un véhicule (81), dans lequel
- le système comprend un agencement conducteur électrique pour produire un champ électromagnétique alternatif et pour ainsi transférer de l'énergie électromagnétique au véhicule (81),
- l'agencement conducteur comprend au moins un et de préférence une pluralité de segments consécutifs (T1, T2, T3, T4, T5), dans lequel chaque segment (T1, T2, T3, T4, T5) s'étend le long d'une section différente du trajet de déplacement du véhicule (81),
- chaque segment (T1, T2, T3, T4, T5) peut être allumé et éteint séparément de tout autre segment,
- le véhicule (81) comprend au moins un récepteur (1) pour recevoir l'énergie électromagnétique,
- le véhicule (81) comprend au moins un transmetteur de signal (2) adapté pour émettre un signal d'activation vers la voie,
- le véhicule (81) comprend un agencement de commande de transmetteur,
- un récepteur de signal (D1, D2, D3, D4) est attribué à chaque segment (T1, T2, T3, T4, T5),
- l'au moins un transmetteur de signal (2) est adapté pour émettre de façon répétée ou de façon continue le signal d'activation vers la voie,
- le récepteur de signal (D1, D2, D3, D4) est adapté pour permettre au segment de produire le champ électromagnétique alternatif alors que le récepteur de signal (D1, D2, D3, D4) reçoit le signal d'activation, dans lequel une commande de segment (3) est adaptée pour arrêter le fonctionnement du segment lorsque le signal d'activation n'est plus reçu par le récepteur de signal (D1, D2, D3, D4) du segment,
**caractérisé en ce que**
- l'agencement de commande de transmetteur est adapté pour arrêter la transmission du signal d'activation si le récepteur et/ou si tout dispositif combiné avec le récepteur ne doit pas être mis en fonctionnement,
- un premier transmetteur de signal (2b) est agencé - par rapport à la direction de déplacement - devant le récepteur (1), pour que le signal d'activation émis par le premier transmetteur de signal (2b) active un segment (T2) avant que le récepteur (1) atteigne la région au-dessus du segment (T2), et un second transmetteur de signal (2a) est agencé - par rapport à la direction de déplacement - derrière le récepteur (1), pour que le signal d'activation du second transmetteur de signal (2a) continue d'activer le segment (T2) jusqu'à ce que le récepteur (1) quitte la région au-dessus du segment (T2).

2. Système selon la revendication 1, dans lequel le récepteur de signal (D1, D2, D3, D4) comprend une zone réceptrice pour recevoir le signal d'activation, dans lequel la zone réceptrice s'étend le long d'une section du trajet de déplacement du véhicule (81).

3. Système selon la revendication 1 ou 2, dans lequel l'agencement de commande (3) comprend au moins un commutateur (32) et/ou fusible (30) adapté pour empêcher le transmetteur de signal (2) d'émettre le signal d'activation, dans lequel l'au moins un commutateur (32) et/ou fusible (30) est/sont sensible(s) à au moins une des suivantes : température du récepteur, température d'un convertisseur de courant pour convertir un courant électrique produit par le récepteur, efficacité opérationnelle du récepteur, du convertisseur de courant et/ou d'un système du véhicule qui utilise l'énergie électromagnétique reçue par le récepteur.

4. Système selon la revendication 3, dans lequel le commutateur (32) et/ou fusible (30) est/sont agencé(s) dans une ligne (41) et sont adapté(s) pour interrompre la ligne (41) si l'au moins un transmetteur de signal (2) doit être empêché d'émettre le signal d'activation.

5. Système selon la revendication 4, dans lequel la ligne (41) est une première ligne mettant sous tension un relais (33) maintenant ainsi le relais (33) dans un état fermé alors que le signal d'activation est transmis et dans lequel le relais (33) est mis hors tension et donc dans l'état ouvert interrompant une seconde ligne (40) à l'au moins un transmetteur de signal (2) si la première ligne (41) est interrompue.

6. Véhicule (81) qui fonctionne en utilisant le système d'une des revendications précédentes, dans lequel
- le véhicule (81) comprend au moins un récepteur (1) pour recevoir l'énergie électromagnétique d'un champ électromagnétique alternatif,
- le véhicule (81) comprend au moins un transmetteur de signal (2) adapté pour émettre un signal d'activation vers la voie pour permettre la génération du champ électromagnétique alternatif,
- le véhicule (81) comprend un agencement de commande de transmetteur (3),
- l'au moins un transmetteur de signal (2) est adapté pour émettre de façon répétée ou de façon continue le signal d'activation vers la voie,
- l'agencement de commande de transmetteur (3) est adapté pour arrêter la transmission du signal d'activation si le récepteur (1) et/ou si tout dispositif combiné avec le récepteur (1) ne doit pas être mis en fonctionnement, **caractérisé en ce que**
- un premier transmetteur de signal (2b) est agencé - par rapport à la direction de déplacement - devant le récepteur (1), pour que le signal d'activation émis par le premier transmetteur de signal (2b) active un segment (T2) avant que le récepteur (1) atteigne la région au-dessus du segment (T2), et un second transmetteur de signal (2a) est agencé - par rapport à la direction de déplacement - derrière le récepteur (1), pour que le signal d'activation du second transmetteur de signal (2a) continue d'activer le segment (T2) jusqu'à ce que le récepteur (1) quitte la région au-dessus du segment (T2).

7. Véhicule selon la revendication 6, dans lequel l'agencement de commande (3) comprend au moins un commutateur (32) et/ou fusible (30) adapté pour empêcher le transmetteur de signal (2) d'émettre le signal d'activation, dans lequel l'au moins un commutateur (32) et/ou fusible (30) est/sont sensible(s) à au moins une des suivantes : température du récepteur, température d'un convertisseur de courant pour convertir un courant électrique produit par le récepteur, efficacité opérationnelle du récepteur, du convertisseur de courant et/ou d'un système du véhicule qui utilise l'énergie électromagnétique reçue par le récepteur.

8. Véhicule selon la revendication 7, dans lequel le commutateur (32) et/ou fusible (30) est/sont agencé(s) dans une ligne (41) et sont adapté(s) pour interrompre la ligne (41) si l'au moins un transmetteur de signal (2) doit être empêché d'émettre le signal d'activation.

9. Véhicule selon la revendication 8, dans lequel la ligne (41) est une première ligne mettant sous tension un relais (33) maintenant ainsi le relais (33) dans un état fermé alors que le signal d'activation est transmis et dans lequel le relais (33) est mis hors tension et donc dans l'état ouvert interrompant une seconde ligne (40) à l'au moins un transmetteur de signal (2) si la première ligne (41) est interrompue.

10. Procédé pour transférer de l'énergie électrique à un véhicule (81), dans lequel
- un champ électromagnétique alternatif est produit par un agencement conducteur électrique situé le long d'une voie, transférant ainsi l'énergie électromagnétique au véhicule (81),
- au moins un segment ou une pluralité de segments consécutifs (T1, T2, T3, T4, T5) de l'agencement conducteur sont allumés et éteints séparément d'autres segments (T1, T2, T3, T4, T5) afin de générer le champ électromagnétique dans une région restreinte d'un trajet de déplacement du véhicule seulement où le véhicule {81) se déplace, dans lequel chaque segment (T1, T2, T3, T4, T5) s'étend le long d'une section différente du trajet de déplacement du véhicule (81),
- l'énergie électromagnétique est reçue en utilisant au moins un récepteur (1) agencé dans le véhicule (81),
- un signal d'activation est transmis à partir du véhicule vers la voie,
- le segment est activé pour produire le champ électromagnétique alternatif,
- le signal d'activation est émis de façon répétée ou de façon continue à partir du véhicule vers la voie,
- le segment est activé alors qu'un récepteur de signal (D1, D2, D3, D4) reçoit le signal d'activation, dans lequel le fonctionnement du segment (T1, T2, T3, T4, T5) est arrêté lorsque le signal d'activation n'est plus reçu par le récepteur de signal (D1, D2, D3, D4) du segment (T1, T2, T3, T4, T5),
**caractérisé en ce que**
- la transmission du signal d'activation est arrêtée si le récepteur (1) et/ou si tout dispositif combiné avec le récepteur (1) ne doit pas être mis en fonctionnement,
- un premier signal d'activation est transmis à partir d'un premier emplacement - par rapport à la direction de déplacement - devant le récepteur par un premier transmetteur de signal (2b), pour que le signal d'activation émis par le premier transmetteur de signal (2b) active un segment (T2) avant que le récepteur (1) atteigne une région au-dessus du segment (T2), et un second signal d'activation est transmis à partir d'un second emplacement - par rapport à la direction de déplacement - derrière le récepteur par un second transmetteur de signal (2a), pour que le signal d'activation du second transmetteur de signal (2b) continue d'activer le segment (T2) jusqu'à ce que le récepteur (1) quitte la région au-dessus du segment (T2).

11. Procédé selon la revendication 10, dans lequel le signal d'activation n'est plus émis si un ou plus d'un des événements suivants se produit/se produisent : une température du récepteur (1) dépasse une valeur maximum prédéterminée ; une température d'un convertisseur de courant pour convertir un courant électrique produit par le récepteur dépasse une valeur maximum prédéterminée ; le récepteur, le convertisseur de courant et/ou un système du véhicule qui utilise l'énergie électromagnétique reçue par le récepteur ne sont pas prêts à être mis en fonctionnement.

12. Procédé selon la revendication 10 ou 11, dans lequel un commutateur (32) et/ou fusible (30) est/sont utilisés pour interrompre une ligne (41) si l'au moins un transmetteur de signal (2) doit être empêché d'émettre le signal d'activation.

13. Procédé selon la revendication 12, dans lequel la ligne (41) est une première ligne utilisée pour mettre sous tension un relais (33) maintenant ainsi le relais (33) dans un état fermé alors que le signal d'activation est transmis et dans lequel le relais (33) est mis hors tension et donc dans l'état ouvert interrompant une seconde ligne (40) à l'au moins un transmetteur de signal (2) si la première ligne (41) est interrompue.

14. Procédé selon une des revendications 10 à 13, dans lequel un courant alternatif d'amplitude constante est produit dans chaque segment (T1, T2, T3, T4, T5) alors que le segment est mis en fonctionnement.
